**Europäisches Patentamt**

**European Patent Office**

**Office européen des brevets**

(19)

(11) Veröffentlichungsnummer : **0 070 476**
**B1**

(12) **EUROPÄISCHE PATENTSCHRIFT**

(45) Veröffentlichungstag der Patentschrift :
**24.04.85**

(21) Anmeldenummer : **82106157.9**

(22) Anmeldetag : **09.07.82**

(51) Int. Cl.⁴ : **G 01 C   9/28**, G 01 C 25/00

(54) **Wasserwaage.**

(30) Priorität : **10.07.81 DE 3127399**

(43) Veröffentlichungstag der Anmeldung :
**26.01.83 Patentblatt 83/04**

(45) Bekanntmachung des Hinweises auf die Patenterteilung : **24.04.85 Patentblatt 85/17**

(84) Benannte Vertragsstaaten :
**AT BE CH DE FR GB IT LI LU NL SE**

(56) Entgegenhaltungen :
**DE-A- 2 254 456**
**DE-B- 2 351 194**
**FR-A- 2 258 619**
**FR-A- 2 323 125**
**US-A- 4 124 940**

(73) Patentinhaber : **Stabila-Messgeräte Gustav Ullrich**
**GmbH & Co.KG**
**Postfach 1340**
**D-6747 Annweiler am Trifels (DE)**

(72) Erfinder : **Leipold, Dieter**
**Bahnhofstrasse 6**
**D-6747 Annweiler am Trifels (DE)**

(74) Vertreter : **Eitle, Werner, Dipl.-Ing. et al**
**Hoffmann, Eitle & Partner Patentanwälte Arabellas-**
**trasse 4**
**D-8000 München 81 (DE)**

## Beschreibung

Die Erfindung betrifft eine Wasserwaage mit einer Libelle, die mit ihrem Libellenkörper in einem kubischen Libellenaufnahmegehäuse gelagert ist, das in einem Wasserwaagenkörper sitzt, der zumindest im Bereich der Libelle als Hohlkörper ausgebildet ist und einen an einer Längsseite des Wasserwaagenkörpers befindlichen Wandausschnitt hat, durch welchen hindurch das Libellenaufnahmegehäuse in den Hohlkörper einsetzbar ist, sowie eine oder mehrere weitere Wände hat, gegen die sich das Libellenaufnahmegehäuse abstützt.

Bei den bekannten Wasserwaagen dieser Art wird das Libellenaufnahmegehäuse mit darin befestigter Libelle im hohlen Wasserwaagenkörper durch Nieten, Kleben oder dergl. befestigt. Es ist auch eine Wasserwaage bekannt geworden (DE-A-2 254 456), bei der die Libelle im Libellengehäuse mittels eines federnden Deckels gehalten ist, wobei Libellengehäuse und Deckel zusammen in das Hohlprofil von dessen Stirnseite her eingeschoben sind. Das Einsetzen und Befestigen des Libellenaufnahmegehäuses ist dabei relativ umständlich. Der Erfindung liegt daher die Aufgabe zugrunde, das Einsetzen und Befestigen des Libellenaufnahmegehäuses im hohlen Wasserwaagenkörper zu vereinfachen und zwar mit größtmöglicher Materialersparnis und unter Gewährleistung einer festen Halterung des Gehäuses im Hohlkörper. Dies wird erfindungsgemäß dadurch erreicht, daß an den Seiten- oder Stirnwänden des Libellenaufnahmegehäuses federnde Zungen angeordnet sind, die mit ihren freien Enden aus einer aneinander herangebogenen Stellung, in der sie das Einsetzen des Libellenaufnahmegehäuses durch den Wandausschnitt hindurch nicht behindern, unter den Rand des Wandausschnittes hineingefedert sind und sich an diesem Rand abstützen und daß das Libellenaufnahmegehäuse bei aneinander herangebogenen Zungen geringfügig kleinere Längs- und Querabmessungen hat als die entsprechenden Abmessungen des Wandausschnittes. Mit dieser Ausbildung wird ein einfaches Einsetzen und Festlegen des Libellenaufnahmegehäuses in den bzw. dem Hohlkörper des Wasserwaagenkörpers möglich, wobei die Befestigung durch Einfedern der Zungen unter den Rand des Wandausschnittes im Hohlkörper erfolgt, mit welchen sich das Libellenaufnahmegehäuse im Hohlkörper fest abstützen kann.

Bei einer bevorzugten Ausführungsform sind die federnden Zungen an den Stirnwänden bzw. Stirnseiten des Libellenaufnahmegehäuses angeordnet und erstrecken sich im wesentlichen vom Boden des Libellenaufnahmegehäuses schräg nach außen gegen die Innenseite des Randes des Wandausschnittes. Die Zungen können aber auch von den Stirnwänden selbst gebildet sein, wenn diese aus einem Material bestehen, das eine entsprechende elastische Verformung der Wände zuläßt.

Das Libellenaufnahmegehäuse kann sich mit Schultern auf dem Rand des Wandausschnittes abstützen. Es kann aber auch an seinem Boden bzw. in seinen Außenwänden zylinderförmige Hohlräume besitzen, in welchen Kolben verschiebbar gelagert sind, die sich mit ihrem aus dem Gehäuse herausragenden Ende gegen die Hohlkörperwand abstützen, die dem Wandausschnitt gegenüber liegt. Von diesen zylinderförmigen Hohlräumen können Kleberkanäle zu Klebestellen zwischen dem Libellenkörper und dem Libellenaufnahmegehäuse bzw. zwischen letzterem und den diesem benachbarten Wänden des Hohlkörpers führen, über welche mit Hilfe der Kolben Kleber zu diesen Klebestellen gedrückt werden kann, mit welchem die Libelle im Gehäuse bzw. das Gehäuse im Hohlkörper festgeklebt werden kann.

Weitere Ausgestaltungen und Vorteile der erfindungsgemäßen Wasserwaage ergeben sich aus der folgenden Beschreibung zweier besonders vorteilhafter Ausführungsbeispiele, die in der Zeichnung dargestellt sind :

Figur 1 zeigt den als Hohlkörper ausgebildeten Wasserwaagenkörper einer Wasserwaage im Bereich seines Wandausschnittes im Längsschnitt durch den Wasserwaagenkörper ;

Figur 2 zeigt den Wasserwaagenkörper mit eingesetztem Libellenaufnahmegehäuse einer ersten Ausführungsform im Längsschnitt sowie Libellenkörper vor dem Einsetzen in das Libellenaufnahmegehäuse ;

Figur 3 zeigt den Wasserwaagenkörper mit eingesetztem Libellenaufnahmegehäuse und eingesetzter Libelle Längsschnitt ;

Figur 4 ist ein Schnitt nach Linie IV-IV in Fig. 2 ;

Figur 5 veranschaulicht den Wasserwaagenkörper mit eingesetztem Libellenaufnahmegehäuse und eingesetztem Libellenkörper einer zweiten Ausführungsform im Längsschnitt abgebrochen dargestellt ;

Figur 6 ist ein Querschnitt nach Linie VI-VI in Fig. 5 ;

Figur 7 zeigt das Libellenaufnahmegehäuse mit Libellenkörper der in Fig. 5 und 6 gezeigten Ausführungsform vor dem Einsetzen in den Wasserwaagenkörper ;

Figur 8 zeigt einen Querschnitt durch das Libellenaufnahmegehäuse gemäß Fig. 7 mit Libellenkörper vor dem Einsetzen in das Gehäuse und einer Gehäuseseitenwand vor der Montage am Gehäuse.

Bei den in der Zeichnung dargestellten Ausführungsformen besteht der Wasserwaagenkörper aus einem Hohlprofil 1 aus Aluminium, welches im Bereich der eingesetzten Horizontallibelle mit einem Wandausschnitt 2 versehen ist. Dieser Wandausschnitt erstreckt sich über eine gesamte schmale Längsseite des Hohlprofils und reicht über einen Teil der anschließenden beiden breiten Längsseiten. Durch diesen Ausschnitt hindurch ist ein Libellenaufnahmegehäuse 3,20 in das Hohlprofil eingesetzt, in welchem der die Libelle enthaltende Libellenkörper 11, 21 gelagert ist.

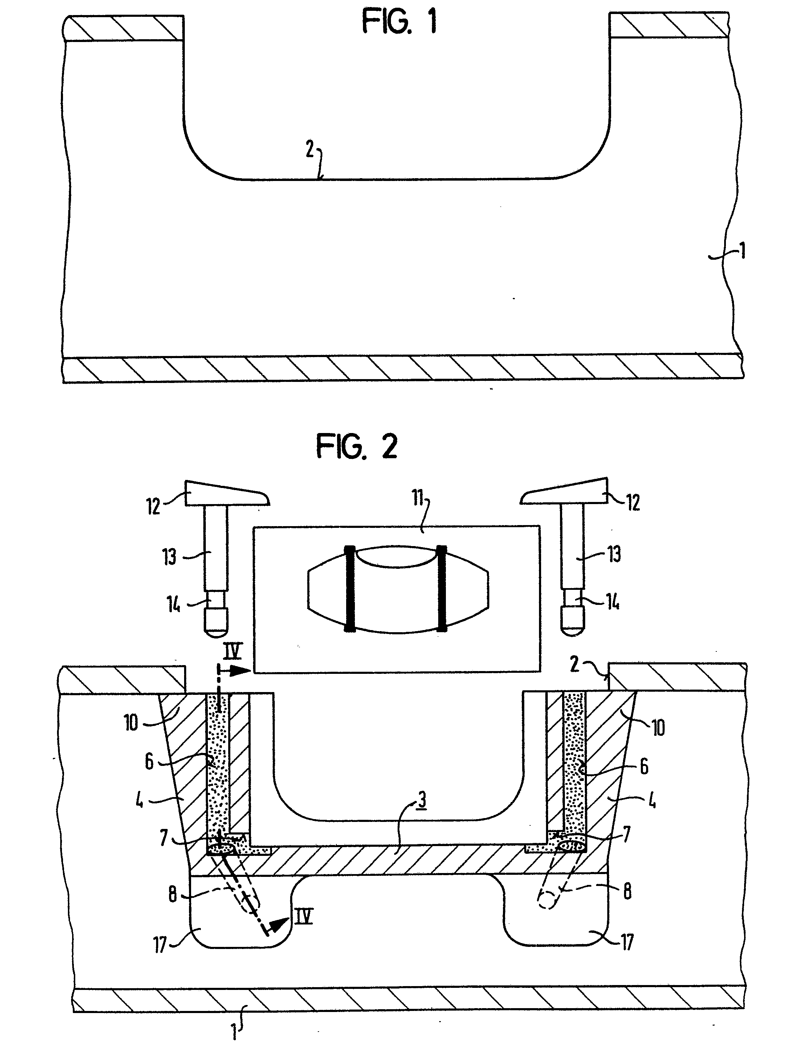

Bei dem in Fig. 1 bis 4 dargestellten Ausführungsbeispiel hat das Libellenaufnahmegehäuse 3 die Form eines kubischen, oben offenen Kastens, dessen Seitenwände zur besseren Sicht auf die Libelle ausgeschnitten sind und der in seinem Inneren den Libellenkörper 11 aufnimmt. Die Stirnwände 22 des Libellenaufnahmegehäuses 3 sind stärker als die übrigen Wände ausgebildet. Die Außenseiten der Stirnwände 4 sind so geneigt, daß sie sich vom Gehäuseboden schräg nach außen erstrecken, so daß das Gehäuse oben länger und unten etwas kürzer als der Wandausschnitt 2 ist.

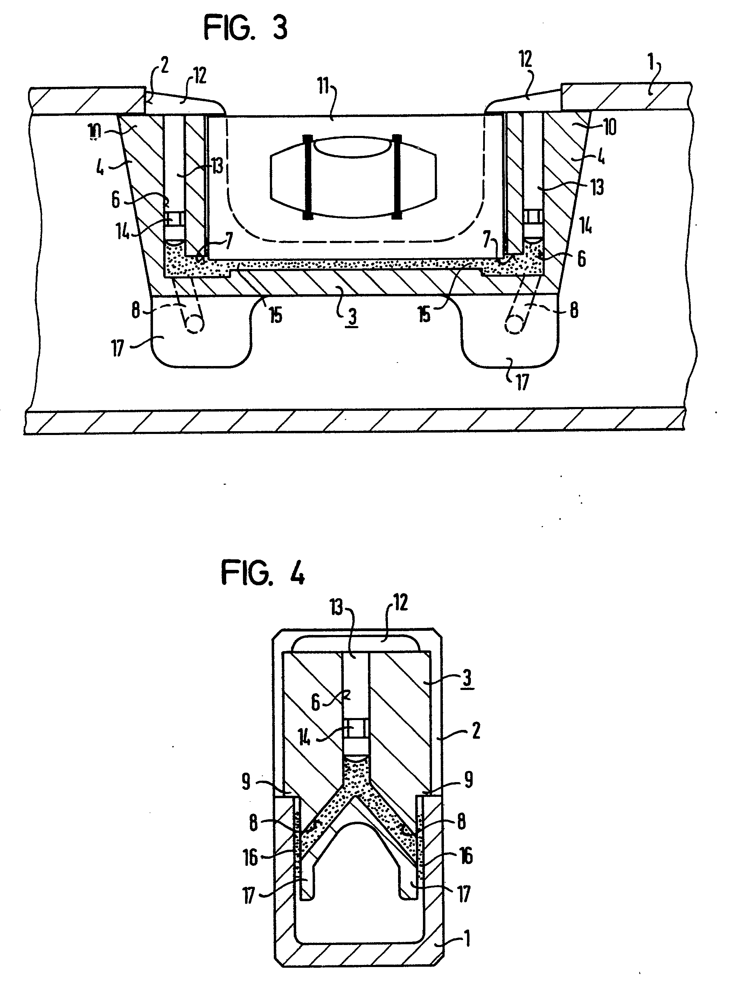

Das Libellenaufnahmegehäuse 3 besteht aus solchem Material, daß die Stirnwände 22 des Gehäuses federnde Zungen bilden, die zum Einsetzen des Gehäuses in den Wasserwaagenkörper 1 mit ihren oberen freien Enden 10 soweit aneinander herangebogen werden können, daß das Gehäuse durch den Wandausschnitt 2 im Wasserwaagenkörper hindurchbewegt werden kann. In eingesetzter Lage federn diese Stirnwände in die Fig. 2 und 3 gezeigte Lage zurück, in welcher sie sich von unter gegen den Rand des Wandausschnittes 2 abstützen. Die Abstützung des Libellenaufnahmegehäuses 3 in entgegengesetzter Richtung erfolgt über seitliche Schultern 9 (Fig. 4), die auf dem seitlichen Rand des Wandausschnittes 2 an den breiten Längsseiten des Wasserwaagenkörpers 1 aufruhen. Damit ist das Libellenaufnahmegehäuse nach unten und nach oben formschlüssig in dem Wasserwaagenkörper festgehalten.

Das Einsetzen des Libellenaufnahmegehäuses in den Wasserwaagenkörper 1 muß erfolgen, bevor der Libellenkörper 11 in das Libellenaufnahmegehäuse eingefügt ist. Denn nur bei leerem Libellenaufnahmegehäuse können dessen Stirnwände mit ihren oberen Enden 10 federnd aneinander herangebogen werden, um das Libellenaufnahmegehäuse durch den Wandausschnitt 2 hindurchschieben zu können, bis es sich mit seinen seitlichen Schultern 9 auf den seitlichen Rand des Wandausschnittes aufsetzt. Dann können die aneinander herangebogenen Stirnwände 22 des Gehäuses entspannt werden, worauf sie mit ihren oberen Enden unter den oberen Stirnrand des Wandausschnittes hineinfedern und sich gegen die Unterseite dieses Randes abstützen. Zu diesem Zweck besteht das Libellenaufnahmegehäuse aus einem Material, das eine elastische Verformung im vorgenannten Umfang zuläßt, aber trotzdem fest genug ist, um den einzusetzenden Libellenkörper in sich unverrückbar festzuhalten.

Durch das anschließend erfolgende Einsetzen des Libellenkörpers 11 in das Libellenaufnahmegehäuse 3 wird ein nachträgliches unerwünschtes Wiederzusammenfedern der Stirnwände 22 verhindert, so daß diese das Gehäuse sicher unter dem oberen Rand des Wandausschnittes 2 festhalten.

Um das Libellenaufnahmegehäuse auch in Längsrichtung des Wasserwaagenköpers 1 festzuhalten, ist der im Querschnitt die Form eines umgekehrten V besitzende Gehäuseboden an seinen Längsrändern mit in Fig. 4 nach unten ragenden Lappen 17 versehen, die sich im geringen Abstand zu den benachbarten breiten Längswänden des Wasserwaagenkörpers 1 erstrecken. In den Stirnwänden 22 des Libellenaufnahmegehäuses 3 sind zylinderförmige Hohlräume 6 vorgesehen, an die sich Kanäle 7 und 8 anschließen, die zu Klebeverbindungsstellen zwischen dem Libellenkörper 11 und dem Libellenaufnahmegehäuse 3 einerseits sowie zwischen letzterem und den breiten Längsseiten des Wasserwaagenkörpers 1 andererseits führen. Dieser Kleber wird durch in die Bohrungen 6 eingesetzte stiftförmige Kolben 13 mit als Labyrinthdichtung wirkenden ringförmigen Nuten 14 an die vorerwähnten Klebeverbindungsstellen gedrückt, an welchen der Kleber ein festes Kleberkissen 15, 16 bildet. Am äußeren Ende der Kolben 13 besitzen diese je eine Deckplatte 12, die bei völlig in die Bohrungen eingesetzten Kolben auf der Oberseite der Stirnwände des Libellenaufnahmegehäuses und teilweise auf der Oberseite des Libellenkörpers 11 aufsitzen und damit ebenfalls ein unerwünschtes Herausfallen des Libellenkörpers aus dem Libellenaufnahmegehäuse verhindern.

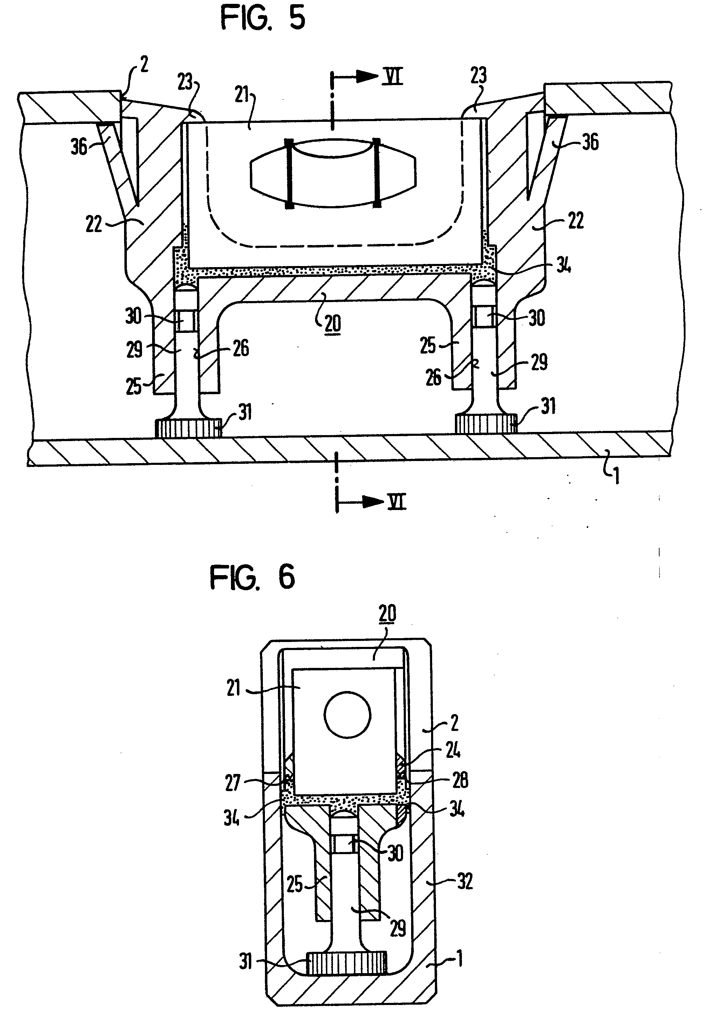

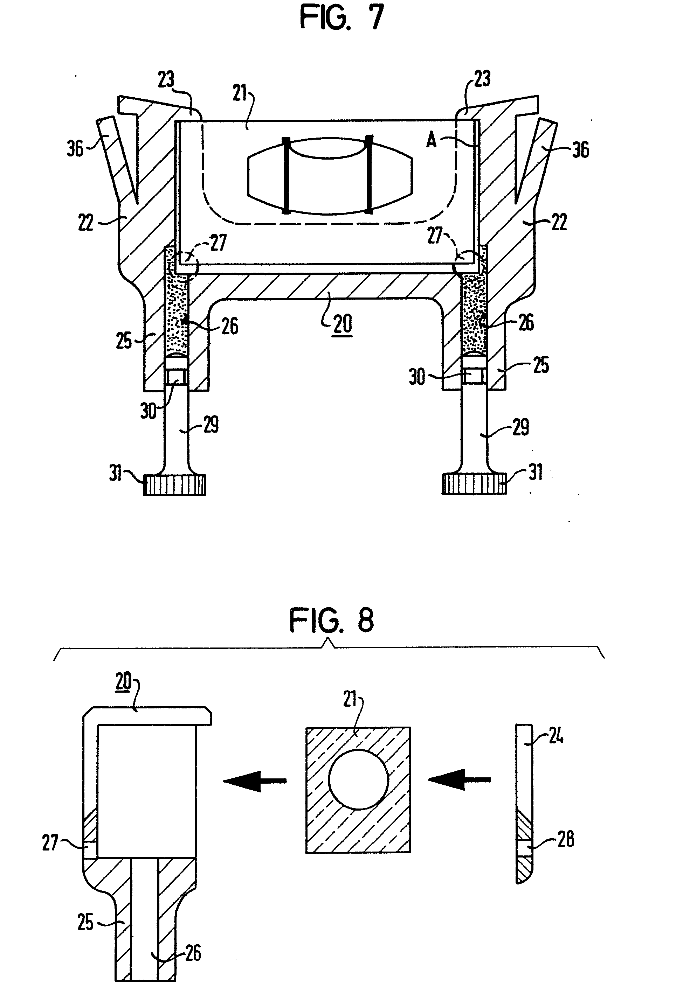

Bei der in Fig. 5 bis 8 dargestellten Ausführungsform ist das Libellenaufnahmegehäuse 20 etwas anders gestaltet als dasjenige der Ausführungsform gemäß Fig. 1 bis 4. Es ist zwar ebenfalls als oben offener kubischer Kasten ausgebildet, dessen Stirnwände 22 jedoch den in ihm gelagerten Libellenkörper 21 mit Ansätzen 23 teilweise übergreifen. Die Stirnwände sind nicht selbst zungenförmig ausgebildet, sondern tragen an ihren Außenseiten eigene federnde Zungen 36, die im entspannten Zustand bei in den Wasserwaagenkörper 1 eingesetzter Lage des Libellenaufnahmegehäuses schräg auswärts unter den oberen Rand des Wandausschnittes 2 im Wasserwaagenkörper hineingefedert sind und sich von unten her gegen diesen Rand abstützen. Diese Zungen können an die Stirnwände 22 herangebogen werden, so daß sie das Einsetzen des Libellenaufnahmegehäuses mit seinen Längs- und Querabmessungen, die geringfügig kleiner sind als die entsprechenden Abmessungen des Wandausschnittes 2, in den Wasserwaagenkörper durch diesen Wandausschnitt hindruch nicht behindern.

Das Einsetzen des Libellenkörpers 21 in das Aufnahmegehäuse 20 erfolgt vor dessen Einsetzen in den Wasserwaagenkörper von der Seite her. Zu diesem Zweck ist eine seiner beiden Seitenwände als abnehmbarer Deckel 2 ausgebildet, der durch nicht dargestellte Einschnappvorrichtungen am Gehäuse festgehalten werden kann. Das Libellenaufnahmegehäuse ist an seinen Seitenwänden sowie an seiner Oberseite ausgeschnitten, um eine bessere Sichtbarkeit der Libelle im Libellenkörper 21 zu ermöglichen.

Am Boden des Libellenaufnahmegehäuses 20 sind zwei Füße 25 vorgesehen, die jeweils zylinderförmige Hohlräume 26 besitzen, in welchen Kolben 29 längsverschiebbar gelagert sind. Diese Kolben stützen sich mit ihren aus dem Libellengehäuse herausragenden unteren Enden gegen die in Fig. 5 untere schmale Längswand des Wasserwaagenkörpers 1 ab, die dem Wandausschnitt 2 gegenüberliegt. Die Kolben 29 weisen als Labyrinthdichtung dienende ringförmige Nuten 30 sowie verbreiterte Köpfe 31 auf, mit welchen sie sich gegen die vorerwähnte schmale Längswand des Waagenkörpers abstützen.

Die zylinderförmigen Hohlräume 26 münden mit ihren inneren Enden in den Zwischenraum zwischen dem Libellenaufnahmegehäuse 20 und dem Libellenkörper 21. Vor dem Einsetzen des Libellenaufnahmegehäuses in den Wasserwaagenkörper sind diese Hohlräume mit Kleber gefüllt, wobei die Kolben 29 nur geringfügig in diese Hohlräume hineinragen und diese nach außen abdichten. Beim Einsetzen des Gehäuses in den Wasserwaagenkörper 1 stützen sich die Kolben mit ihren Köpfen 31 an der in Fig. 5 unten liegenden schmalen Längswand des Wasserwaagenkörpers ab, wodurch sie tiefer in die sie aufnehmenden Hohlräume 26 hineingeschoben werden. Hierdurch wird der in den Hohlräumen befindliche Kleber in den Zwischenraum zwischen Libellengehäuse 20 und Libellenkörper 21 gedrückt, wo diese beiden Teile der Wasserwaage fest verbindende Kleberkissen 34 bildet.

Die feste Längsseitenwand des Libellengehäuses sowie der gegenüberliegende lösbare Deckel 24 sind im Bereich der Einmündung der zylinderförmigen Hohlräume 26 in den Zwischenraum zwischen Gehäuse 20 und Libellenkörper 21 mit Bohrungen 27, 28 versehen, durch welche hindurch der aus den Hohlräumen verdrängte Kleber auch auf die Außenseite des Gehäuses in den Raum zwischen diesem Gehäuse und den benachbarten breiten Längswänden des Wasserwaagenkörpers 1 gelangt, um hierdurch eine Verklebung und damit Festlegung des Libellenaufnahmegehäuses 20 im Wasserwaagenkörper zu gewährleisten (siehe Fig. 6).

Die in Fig. 5 bis 8 dargestellte Ausführungsform kann auch dahingehend abgewandelt werden, daß das Libellenaufnahmegehäuse 20 aus zwei symmetrischen Querhälften ausgebildet ist, die nach dem Einsetzen des Libellenkörpers in Querrichtung des Gehäuses zusammengesetzt und in dieser zusammengesetzten Lage in den Wasserwaagenkörper eingedrückt werden. Dabei kann der eine Fuß 25 mit Hohlraum 26 in der einen Querhälfte und der andere Fuß mit Hohlraum in der anderen Querhälfte des Libellengehäuses angeordnet sein.

**Patentansprüche**

1. Wasserwaage mit einer Libelle, die mit ihrem Libellenkörper (11, 21) in einem kubischen Libellenaufnahmegehäuse (3, 20) gelagert ist, das in einem Wasserwaagenkörper sitzt, der zumindest im Bereich der Libelle als Hohlkörper (1) ausgebildet ist und einen an einer Längsseite des Wasserwaagenkörpers befindlichen Wandausschnitt (2) hat, durch welchen hindurch das Libellenaufnahmegehäuse (3, 20) in den Hohlkörper (1) einsetzbar ist, sowie eine oder mehrere weitere Wände hat, gegen die sich das Libellenaufnahmegehäuse abstützt, dadurch gekennzeichnet, daß an den Seiten- oder Stirnwänden des Libellenaufnahmegehäuses (3, 20) federnde Zungen (4, 36) angeordnet sind, die mit ihren freien Enden aus einer aneinander herangebogenen Stellung, in der sie das Einsetzen des Libellenaufnahmegehäuses (3, 20) durch den Wandausschnitt (2) hindurch nicht behindern, unter den Rand des Wandausschnittes (2) hineingefedert sind und sich an diesem Rand abstützen und daß das Libellenaufnahmegehäuse (3, 20) bei aneinander herangebogenen Zungen (4, 36) geringfügig kleinere Längs- und Querabmessungen hat als die entsprechenden Abmessungen des Wandausschnitts (2).

2. Wasserwaage nach Anspruch 1, dadurch gekennzeichnet, daß die federnden Zungen (36) an den Stirnwänden des Libellenaufnahmegehäuses (20) angeordnet sind und sich im wesentlichen vom Boden des Libellenaufnahmegehäuses schräg nach außen gegen die Innenseite des Randes des Wandausschnittes (2) erstrecken (Fig. 5 bis 8).

3. Wasserwaage nach Anspruch 1, dadurch gekennzeichnet, daß die federnden Zungen (4, 36) als am Rand des Wandausschnittes (2) anliegende Anschläge (10) ausgebildet sind.

4. Wasserwaage nach Anspruch 1, dadurch gekennzeichnet, daß die Seiten- bzw. Stirnwände (22) des Libellenaufnahmegehäuses (3) selbst als federnde Zungen ausgebildet sind (Fig. 1 bis 4).

5. Wasserwaage nach Anspruch 1, dadurch gekennzeichnet, daß das Libellenaufnahmegehäuse (3) sich mit Schultern (9) auf dem Rand des Wandausschnittes (2) abstützt (Fig. 4).

6. Wasserwaage nach Anspruch 1, dadurch gekennzeichnet, daß das Libellenaufnahmegehäuse (20) an seinem Boden bzw. in seinen Außenwänden zylinderförmige Hohlräume (26) besitzt, in welchen Kolben (29) verschiebbar gelagert sind, die sich mit ihrem aus dem Gehäuse herausragenden Kopf (31) gegen die benachbarte Wand des Hohlkörpers (1) abstützen, die dem Wandausschnitt (2) gegenüberliegt (Fig. 5 bis 8).

7. Wasserwaage nach Anspruch 1, dadurch gekennzeichnet, daß im Libellenaufnahmegehäuse (3, 20) mit Kolben (13, 29) verschließbare Kleberkanäle (6, 26) vorgesehen sind, die zu Klebestellen zwischen dem Libellenkörper (11, 21) und dem Libellenaufnahmegehäuse (3, 20) bzw. zwischen dem Libellenaufnahmegehäuse und den diesen benachbarten Wänden des Hohlköpers (1) führen.

8. Wasserwaage nach Anspruch 7, dadurch gekennzeichnet, daß die Kolben (29) für das Verschließen der Kleberkanäle (26) von den in Anspruch 6 genannten Abstützkolben gebildet sind.

9. Wasserwaage nach den Ansprüchen 1 und 7, dadurch gekennzeichnet, daß am Boden bzw. an Seitenwänden des Libellenaufnahmegehäuses (3) Laschen (17) vorgesehen sind, die sich neben den Seitenwänden des Hohlkörpers (1) im wesentlichen parallel zu diesen erstrecken und einen Zwischenraum zwischen sich und den Seitenwänden bilden, in welchen die im Libellenaufnahmegehäuse befindlichen Kleberkanäle einmünden (Fig. 1 bis 4).

10. Wasserwaage nach den Ansprüchen 1 und 7, dadurch gekennzeichnet, daß in den Seitenwänden (22) des Libellenaufnahmegehäuses (3) zu den Klebestellen führende Kleberkanäle (6) angeordnet sind, die von der dem Wandausschnitt (2) zugewandten Oberseite des Gehäuses ausgehen und mittels durch diesen Ausschnitt hindurch eingeschobenen Kolben (13) verschlossen sind.

11. Wasserwaage nach Anspruch 10, dadurch gekennzeichnet, daß die Kolben (13) mit ihrem rückwärtigen Ende an einer Abdeckplatte (12) sitzen, die auf der Oberseite des Libellenaufnahmegehäuses (3) aufruht und sich mit ihrem Seitenrand an den Rand der Durchbrechung (2) anschließt.

12. Wasserwaage nach einem der Ansprüche 6 bis 10, dadurch gekennzeichnet, daß die im Boden oder an den unteren Seiten- bzw. Stirnwänden des Libellenaufnahmegehäuses (3, 20) befindlichen durch Kolben (13, 29) verschlossenen zylindrischen Kleberkanäle zu den zwischen dem Boden und den Stirnwänden des Gehäuses befindlichen inneren Gehäuseecken führen.

13. Wasserwaage nach Anspruch 1, dadurch gekennzeichnet, daß das Libellenaufnahmegehäuse (20) zwei sich parallel zur Längsseite des Wasserwaagenkörpers (1) erstreckende Seitenwände aufweist, von welchen eine mit dem Boden bzw. den Stirnwänden des Gehäuses einstückig ausgebildet und die anderen in Form eines Deckels (24) an dem Boden bzw. den Stirnwänden lösbar befestigt ist.

14. Wasserwaage nach Anspruch 1, dadurch gekennzeichnet, daß mindestens zwei einander gegenüberliegende Seiten- bzw. Stirnwände des Libellenaufnahmegehäuses (20) den Libellenkörper (21) teilweise übergreifen (23).

**Claims**

1. Spirit level having a bubble which is supported in a cubical bubble mounting housing (3, 20) by means of its bubble body (11, 21), which housing is seated in a spirit level body which, at least in the region of the bubble, is formed as a hollow body (1) and has a wall aperture (2) located on a longitudinal side of the spirit level body through which aperture the bubble mounting housing (3, 20) is insertable into the hollow body (1), and has one or more further walls against which the bubble mounting housing abuts, characterised in that on the sides or front walls of the bubble mounting housing (3, 20) resilient tongues (4, 36) are arranged which by means of their free ends are sprung in under the edge of the wall aperture (2), from a position in which they are deflected together and do not obstruct insertion of the bubble receiving housing (3, 20) through the wall aperture (2), and about against this edge of the wall aperture, and in that the bubble receiving housing (3, 20) has slightly smaller longitudinal and traverse dimensions when the tongues (4, 36) are deflected together than the corresponding dimensions of the wall aperture (2).

2. Spirit level according to claim 1, characterised in that the sprung tongues (36) are arranged on the front walls of the bubble receiving housing (20) and extend from the floor of the bubble receiving housing obliquely outwardly against the inner side of the periphery of the wall aperture (2) (Figures 5 to 8).

3. Spirit level according to claim 1, characterised in that the sprung tongues (4, 36) are formed as stops (10) lying on the periphery of the wall aperture (2).

4. Spirit level according to claim 1, characterised in that the side and front walls (22) of the bubble receiving housing (3) are formed themselves as sprung tongues (Figures 1 to 4).

5. Spirit level according to claim 1, characterised in that the bubble receiving housing (3) is supported on the periphery of the wall aperture (2) by means of shoulders (9) (Figure 4).

6. Spirit level according to claim 1, characterised in that the bubble receiving housing (20) is provided with cylindrical hollow spaces (26) on its floor or in its outer walls in which pistons (29) are displaceably mounted which with their head (31) extending from the housing abut against the neighboring wall of the hollow body (1) which lies opposite the wall aperture (2) (Figures 5 to 8).

7. Spirit level according to claim 1, characterised in that in the bubble receiving housing (3, 20) with pistons (13, 29) closable adhesion channels (6, 26) are provided which lead to adhesion positions between the bubble body (11, 21) and the bubble receiving housing (3, 20) or between the bubble receiving housing and the walls of the hollow body (1) adjacent this.

8. Spirit level according to claim 7, characterised in that the pistons (29) for the closure of the adhesion channels (26) are formed from the support pistons mentioned in claim 6.

9. Spirit level according to claims 1 and 7, characterised in that on the floor or on the side walls of the bubble receiving housing (3) side bars (17) are provided which extend adjacent the side walls of the hollow body (1) substantialy parallel to this and form an intermediate space in cooperation with the side walls into which the adhesion channels located in the bubble receiving housing discharge (Figures 1 to 4).

10. Spirit level according to claims 1 and 7, characterised in that in the side walls (22) of the bubble receiving housing (3) adhesion channels (6) leading to the adhesion positions are arranged, which extend from the upper side of the housing facing the wall aperture (2) and are closed by means of pistons (13) inserted through this aperture.

11. Spirit level according to claim 10, characterised in that the pistons (13) are seated with their rear end on a cover plate (12) which rests on the upper side of the bubble receiving housing (3) and contacts the edge of the aperture (2) with its side edge.

12. Spirit level according to one of claims 6 to 10, characterised in that the cylindrical adhesion channels located in the floor or on the lower side or front walls of the bubble receiving housing (3, 20) and closable by pistons (13, 29) lead to the inner housing corners between the floor and the front walls of the housing.

13. Spirit level according to claim 1, characterised in that the bubble receiving housing (20) has two side walls extending parallel to the longitudinal side of the spirit level body (1), of which one is formed in one piece with the floor or the front walls of the housing and the other is releasably secured in the form of a cover (24) on the floor or the front walls.

14. Spirit level according to claim 1, characterised in that at least two mutually opposite side or front walls of the bubble receiving housing (20) partially overlap (23) the bubble body (1).


**Revendications**

1. Niveau à bulle avec un tube à bulle qui a son corps (11, 21) monté dans un boîtier tubique de réception du tube à (3, 20), lequel repose dans un corps du niveau à bulle qui, au moins dans la région du tube à bulle, est conformé en corps creux (1), avec une découpure de paroi (2) se trouvant dans un côté longitudinal de ce corps du niveau à bulle, découpure à travers laquelle le boîtier de réception du tube à bulle (3, 20) peut être mis en place dans ce corps creux (1), et qui a une ou plusieurs autres parois contre lesquelles s'appuie le boîtier de réception du tube à bulle, caractérisé en ce que sur les parois latérales ou frontales du boîtier de réception du tube à bulle (3, 20) sont disposées des languettes élastiques (4, 36) qui, à partir d'une situation où leurs extrémités libres sont inclinées l'une vers l'autre et n'empêchent pas la mise en place du boîtier de réception du tube à bulle (3, 20) à travers la découpure de paroi (2), s'engagent élastiquement sous le bord de la découpure de paroi (2) et prennent appui contre ce bord, et en ce que le boîtier de réception du tube à bule (3, 20), lorsque les languettes (4, 36) sont inclinées l'une vers l'autre, à des dimensions longitudinales et transversales très légèrement plus faibles que les dimensions correspondantes de la découpure de paroi (2).

2. Niveau à bulle selon la revendication 1, caractérisé en ce que les languettes élastiques (36) sont disposées sur les faces frontales du boîtier de réception du tube à bulle (20) et s'étendent obliquement essentielement à partir du fond du boîtier de réception du tube à bulle, vers l'extérieur, contre la face intérieure du bord de la découpure de paroi (2) (Fig. 5 à 8).

3. Niveau à bulle selon la revendication 1, caractérisé en ce que les languettes élastiques (4, 36) sont constituées comme des butées (10) s'appliquant contre le bord de la découpure de paroi (2).

•4. Niveau à bulle selon la revendication 1, caractérisé en ce que les parois latérales ou frontales (22) du boîtier de réception du tube à bulle (3) sont elles-mêmes réalisées comme des languettes élastiques.

5. Niveau à bulle selon la revendication 1, caractérisé en ce que le boîtier de réception du tube à bulle (3) s'appuie par des épaulements (9) contre le bord de la découpure de paroi (2) (Fig. 4).

6. Niveau à bulle selon la revendication 1, caractérisé en ce que le boîtier de réception du tube à bulle (20) possède à son fond ou à ses parois extérieures, des espaces creux (26) de forme cylindrique, dans lesquels sont montés de façon déplaçable des pistons (29) qui s'appuient par leur tête (31) saillantes hors du boîtier contre la paroi voisine du corps creux (1) se trouvant à l'opposé de la découpure de paroi (2) (Fig. 5 à 8).

7. Niveau à bulle selon la revendication 1, caractérisé en ce que dans le boîtier de réception du tube à bulle (3, 20) sont prévus des canaux à colle (5, 26) qui sont obturables par des pistons (13, 29) et qui conduisent à des zones de collage entre le corps du tube à bulle (11, 21) et le boîtier de réception du tube à bulle (3, 20) et entre le boîtier de réception du tube à bulle et les parois du corps creux (1) voisines de ce boîtier.

8. Niveau à bulle selon la revendication 7, caractérisé en ce que les pistons (29) pour la fermeture des canaux à colle (26) sont consitutés par les pistons d'appui de la revendication 6.

9. Niveau à bulle selon les revendications 1 et 7, caractérisé en ce que sur le fond ou sur les parois latérales du boîtier de réception du tube à bulle (3) sont prévues des brides (17) qui s'étendent au voisinage des parois latérales du corps creux (1), sensiblement parallèlement à celles-ci et limitent entre elles-mêmes et les parois latérales un espace intermédiaire dans lequel débouchent les canaux à colle qui se trouvent dans le boîtier de réception du tube à bulle (Fig. 1 à 4).

10. Niveau à bulle selon les revendications 1 et 7, caractérisé en ce que dans les parois latérales (22) du boîtier de réception du tube à bulle (3) sont disposés des canaux à colle (6) menant aux zones de collage, qui partent de la face supérieure, tournée vers la découpure de paroi (2) du boîtier et qui sont obturés au moyen de pistons (13) passant à travers cette découpure.

11. Niveau à bulle selon la revendication 10, caractérisé en ce que les pistons (13) portent à leur extrémité arrière une plaque couvrante (12) qui repose sur la face supérieure du boîtier de réception du tube à bulle (3) et qui se raccorde par un bord latéral avec le bord de la découpure (2).

12. Niveau à bulle selon l'une quelconque des revendications 6 à 10, caractérisé en ce que les canaux à colle cylindriques obturables par des pistons (13, 29) se trouvant dans le fond ou dans les parois inférieures latérales ou frontales du boîtier de réception du tube à bulle (3, 20) mènent aux coins intérieurs du boîtier se trouvant entre le fond et les parois latérales du boîtier.

13. Niveau à bulle selon la revendication 1, caractérisé en ce que le boîtier de réception du tube à bulle (20) présente deux parois latérales s'étendant parallèlement aux côtés longitudinaux du corps du niveau à bulle (1), parois latérales dont l'une constitue une seule pièce avec le fond, et avec les parois frontales du boîtier et dont l'autre se fixe de manière amovible, sous forme d'un couvercle (24), au fond ou aux parois frontales.

14. Niveau à bule selon la revendication 1, caractérisé en ce qu'au moins deux parois latérales ou frontales opposées l'une à l'autre du boîtier de réception du tube à bulle (20) recouvrent en partie le corps du tube à bulle (21).

# FIG. 1

# FIG. 2

FIG. 3

FIG. 4

FIG. 5

FIG. 6

# FIG. 7

# FIG. 8

4